Europäisches Patentamt

European Patent Office

Office européen des brevets

(11) Publication number: **0 468 126 A1**

# EUROPEAN PATENT APPLICATION

(21) Application number: **90830349.8**

(22) Date of filing: **26.07.90**

(51) Int. Cl.⁵: **G09F 5/00, G06F 15/62**

(43) Date of publication of application:
**29.01.92 Bulletin 92/05**

(84) Designated Contracting States:
**AT BE CH DE DK ES FR GB GR IT LI LU NL SE**

(71) Applicant: **JFIL INFORMATICA SNC di Rebottini Giovanni, Ennio & C.**
**via Mazzini 331, Direzionale "Il Ventaglio"**
**Sassuolo (Modena)(IT)**

(72) Inventor: **Rebottini, Giovanni**
**Via Covetta 42/A**
**Castellarano (Reggio Emilia)(IT)**
Inventor: **Rebottini, Ennio**
**Via Covetta 19**
**Castellarano (Reggio Emilia)(IT)**
Inventor: **Barbieri, Guido**
**Via Traversale XXII Ottobre 2**
**Sassuolo (Modena)(IT)**

(74) Representative: **Sassatelli, Franco T., Dr.**
**c/o INIP via Ruggi 5**
**I-40137 Bologna(IT)**

(54) **Electronic data-processing system for showing ceramic samplings.**

(57) Computer image system for displaying a range of ceramic products, such as tiles, together with a picture of an example application environment, such as a bathroom. Electronics catalogues of ceramic tiles are distributed to commercial agents on magnetic media. The agent's computer displays an image of an application environment chosen to resemble the customer's. The image is displayed such that different tiling schemes can be simulated in this environment. The customer's final choices may be printed.

FIG.4

The invention relates to a new system for showing ceramic samplings, by using and particular fitting of electronic data-processing hardware and software, allows to properly equip commercial agents for their contact with customers thus obviating the actual use of the goods and conventional advertising material such as catalogues and other. The system consists in putting on computer after having shot, by means of a television camera, scanner or similar devices, the image of the product to offer, as well as its fitting development by means of software which allows the simulation on the monitor and/or printer of different kind of the above mentioned object.

The present presentation system foresees that the ceramic company that produces any line of material, such as tiles, decorations, Greek key disigns and other, supplies to their commercial agents with the relevant samplings on exibiting panels. These agents, with own means and/or of the represented company, will then have to transport said samplings to the retailer's seat or to their own customers'one, to let them examine or as a support for possible sales. In connection with the above mentioned panels, the ceramic manufacturer gives to their agents catalogues, brochures with photos of the materials, laying schemes such as set of inner or outer rooms already carried out, which complete the advertising line.

The invention system, in a preliminary way, foresees to insert the image of each product into a computer thus allowing to obtain in this way, by means of proper operator and of software, electronic catalogues, fitting schemes and either inside or outside surrounding schemes. In particular can be made fictitious surrounding schemes and can be changed inside or outside photos, previously obtained by photographic support or from television camera, to examine afterwards by video, equipped with either vocal support, or by printer. After having carried out this first operation, the result will be transported on magnetic support that the ceramic company will put at disposal of its commercial agents who, by means of a handle computer, could supply the different retailers with this new advertising material. These retailers, in their turn, by means of further handle or fixed computer will present the material to their customers. In this way all advertising material now used, in particular the samplings, will be completely eliminated and replaced by an easily used and transported product.

In a particular execution version of the invention a presentation of a line of ceramic goods is examined within a business contact between an agent and an expert who has to choose the ceramic materials to be used in carrying out a project of an outer and inside project to then submit to the committent for approval before authorizing the commission. For the surrounding analysis, the agent will let appear on the monitor the references of different kinds as to the materials to allow to the expert a selection of the products to pass to the surrounding analysis. In order to elaborate on video a surrounding image, the same video is decomposed in vertical sectors as wide as the minimum material image. With specific reference to the project to carry out, the agent will let appear on the video the image most corresponding to the said project, by choosing it from a set of available images. On the base of laying position established in advance, he will let appear the images of the materials selected in advance, thus allowing the final choice. By means of printer the agent will be in a position to deliver to the customer the surrounding image on a paper support or other, with the chosen coating types with, on the borders, the images of each material samples. These images in connection will be examined by the committent before ordering the materials.

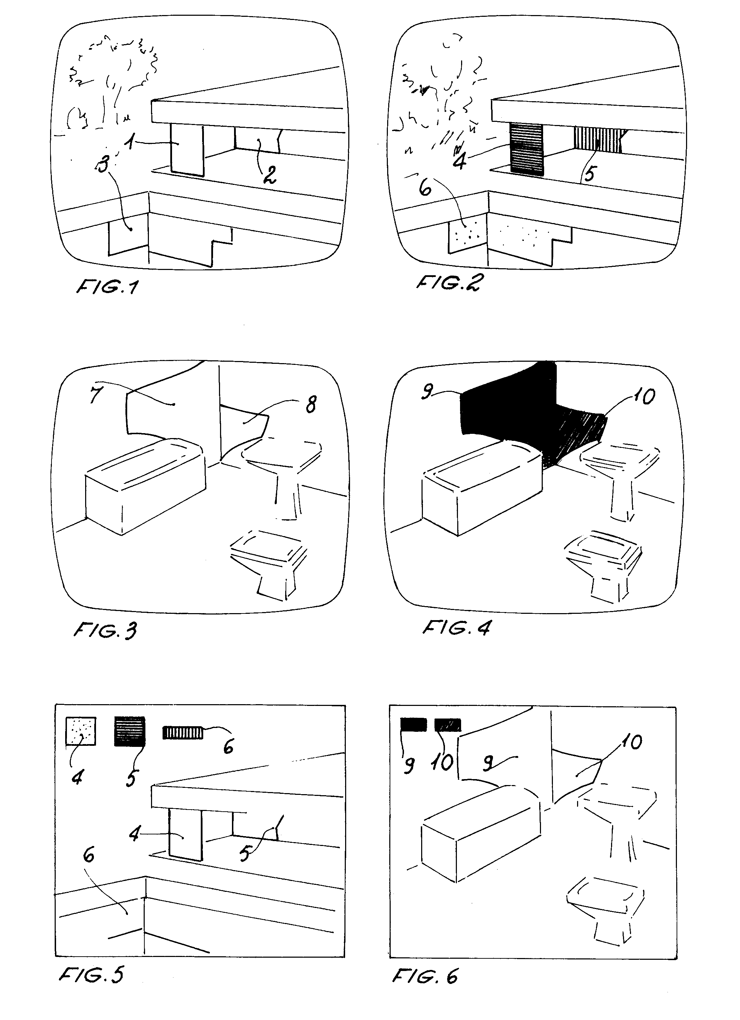

Execution form of the above procedure is illustrated in a merely indicative, and therefore not limiting way, in the drawing of Table 1. With reference to this one, fig. 1 is the view of an outer surrounding image, from which the wall lengths 1, 2 and 3 can be noted, which are at disposal for observation of the preselection samplings. Fig. 2 is view of the same image of fig. 1 to show on wall the ceramic coatings 4, 5 and 6. Fig. 3 is view of a bath-room where can be noted walls 7 and 8 on which will put the preselection ceramic samplings. Fig. 4 is the view of the same image of fig. 3 but where the coating lengths 9 and 10 can be boted. Figures 5 and 6 show a scheme of the supports taken from the printer and which define, with a sught checking, the conclusions of the two above analysis to submit to approval, or only for archives. Specifically fig. 5 shows the chosen outer surrounding of ceramic coatings 4, 5 and 6 each sample of which are given sidewise. The printed square of fig. 6 on the contrary shows the surrounding chosen inside for lengths of the ceramic coatings 7 and 8, samplings of which are given on the border.

The system can be carried out in different ways, with possible aid and integration with other means and proper devices in connection with the use requirements.

## Claims

1. Electronic data-processing system for showing ceramic samplings, characterized by the fact that the images of the ceramic product, its features and fitting development taken by means of television camera, with hardware and software, are introduced into a computer allowing the simulation on monitor and/or printer of what concerns both the observation and character aspect of the product and its surrounding requirements. This enables to prepare electronic catalogues, with schemes for layouts and reference inside and outside surrounding examples according to the specific customer's requirements which can then be examined in video, also with audio support if required, or with printer. All that will be brought on a magnetic support which the agent, by means of a computer, will use when exibiting and in the market negotiations. For the material choice, the system foresees to form images and surroundings to obtain by combining a layout image, which remains on the square, whereas on some surface parts ordered in advance, the coating image will appear in succession of coating to be carried out with the materials in examination. In order to obtain all that, the exposition square will be decomposed into vertical bands as long as those of minimum formation of the surface lengths ordered in advance for exhibiting the coatings. The analysis can be carried out by preselecting the materials and then by choosing one or more reference laying images according to the use requirements. On the laying image, referred to his interest square, the customer will then be able to choose by observing the different materials fitted in the surroundings which will appear on the monitor.

2. Electronic data-processing system for showing ceramic samplings, as per claim 1), characterized by the fact that the agent by means of a printer will be able to give to the customer a paper with one or more surrounding images, chosen on the monitor, during the observations, which show the ordered coating type in position and in overimpression for one or more types of relevant samplings. This enables to obtain an analysis sample to acquire for documentation and particularly interesting to be definitely approved.

FIG.1

FIG.2

FIG.3

FIG.4

FIG.5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | NN-A-   (Netherlands)vol. 8, no. 2, June 1989, pages 143 - 150; M. Plummer et al: "Mass market applications for real-time 3D graphics" <br> * page 143, left-hand column, paragraph 3 right-hand column, paragraph 3 * * page 146, left-hand column, paragraph 3 right-hand column, paragraph 1 EP 90830349030* * page 147, right-hand column, paragraphs 1 - 3 * * page 149, right-hand column, paragraph 3; figures 6, 7 * | 1,2 | G 09 F 5/00 <br> G 06 F 15/62 |
| A | Informatik Spektrum vol. 13, no. 3, June 1990, Berlin pages 137 - 150; Steppan et al: "Computer Aided Selling - Neuere Entwicklungen bei der DV-Unterstützung des industriellen Vertriebs" <br> * page 142, right-hand column, paragraph 3 page 144, left-hand column, paragraph 2 * * page 145, right-hand column, paragraph 5 EP 90830349030page 147, left-hand column * | 1,2 | |
| A | US-A-4 194 307   (ELLIS P. PAYNE) <br> * abstract; figure 1 * * column 1, lines 14 - 23 * | 1 | |
| A | FR-A-2 590 708   (MAISONS PIERRE BAC (S.A.) <br> * abstract; claim 1 * | 1 | **TECHNICAL FIELDS SEARCHED (Int. Cl.5)** <br> G 09 F <br> G 06 F <br> H 04 N |
| A | EP-A-0 270 319   (LOGISTICS DATA SYSTEMS INC.) <br> * column 22, paragraphs 3 - 4 * | 1 | |
| A | US-A-2 301 274   (MELVIN R. GREISER) <br> * page 1, paragraphs 1 - 3; figure 1 * | 1 | |

The present search report has been drawn up for all claims

| Place of search | Date of completion of search | Examiner |
|---|---|---|
| Berlin | 25 March 91 | NICHOLLS J |